# EUROPÄISCHE PATENTANMELDUNG

(11) **EP 4 693 131 A1**
(43) Veröffentlichungstag der Anmeldung: **11.02.2026**
(21) Anmeldenummer: 25188066.2
(22) Anmeldetag: 08.07.2025
(51) Int. Cl.: G06Q 10/08

(54) **MEHRWEG-WARENTRÄGER, WARENTRÄGER-ZIRKULATIONSSYSTEM, MOBILES LOGISTIK-DATENNETZWERK SOWIE VERFAHREN ZUR ÜBERTRAGUNG VON STANDORTINFORMATIONEN VON MEHRWEG-WARENTRÄGERN INNERHALB EINES WARENTRÄGER-ZIRKULATIONSSYSTEMS**

(30) Priorität: 08.08.2024 DE 102024122745
(71) Anmelder: IFCO Management GmbH, 82049 Pullach (DE)
(72) Erfinder: SCHLÜTER, Daniel, 82049 Pullach (DE); GRAMS, Sebastian, 82049 Pullach (DE)
(74) Vertreter: Prinz & Partner mbB

(57) **Zusammenfassung**

Es wird ein Mehrweg-Warenträger (12) gezeigt, der dafür vorgesehen und eingerichtet ist, in einem Warenträger-Zirkulationssystem verwendet zu werden. Dabei ist an dem Warenträger ein Access-Point (34) für ein Beacon (26) angebracht. Ferner wird ein Warenträger-Zirkulationssystem und ein mobiles Logistik-Datennetzwerk (42) gezeigt, sowie ein Verfahren zum Übertragen von Standort-Informationen von Mehrweg-Warenträgern (12), die innerhalb des Warenträger-Zirkulationssystems zirkulieren.

## Beschreibung

Die Erfindung betrifft einen Mehrweg-Warenträger, der dafür vorgesehen und eingerichtet ist, in einem Warenträger-Zirkulationssystem verwendet zu werden, sowie ein Warenträger-Zirkulationssystem mit einer Vielzahl an solchen Mehrweg-Warenträgern. Des Weiteren betrifft die Erfindung ein Verfahren zum Übertragen von Standortinformationen von Mehrweg-Warenträgern innerhalb eines Warenträger-Zirkulationssystems sowie ein mittels der Mehrweg-Warenträger eingerichtetes mobiles Logistik-Datennetzwerk.

Es ist bekannt, dass zum Transport von Waren zwischen einem Produzenten, einem Verteilzentrum oder einen Zwischenhändler und einem Einzelhändler Mehrweg-Warenträger aus Kunststoff verwendet werden, die in einem Kreislauf zirkulieren. Bei den Mehrweg-Warenträgern kann es sich beispielsweise um Kästen, Paletten, Trays oder kistenförmige bzw. containerförmige Behälter handeln. Vor allem bei Mehrweg-Warenträger, die nicht als Paletten oder Trays ausgebildet sind, handelt es sich häufig um faltbare bzw. klappbare Warenträger, um die Mehrweg-Warenträger möglichst platzsparend zu transportieren und zu lagern, wenn sie nicht in Benutzung sind.

Wenn es sich bei den Mehrweg-Warenträgern um Kisten handelt, werden sie insbesondere zum Transport von Obst und Gemüse verwendet. Wenn es sich um Paletten handelt, können die verschiedensten Waren auf ihnen gestapelt werden.

Die Mehrweg-Warenträger eigenen sich insbesondere für die Verwendung in Warenträger-Zirkulationssystemen, bei denen die Mehrweg-Warenträger zwischen verschiedenen Stationen zirkuliert werden. Zu den einzelnen Stationen des Warenträger-Zirkulationssystems gehören beispielsweise Bestückungsstationen, Logistikzentren, Transportmittel und Verkaufsstellen, aber auch Lagerzentren und Reinigungsstationen.

Üblicherweise werden dabei die Mehrweg-Warenträger von einem Dienstleister zur Verfügung gestellt, der nach Benutzung der Mehrweg-Warenträger für deren Inspektion und Reinigung zuständig ist und sich häufig auch für deren Rückführung zur Bestückungsstation kümmert.

Die Warenträger-Zirkulationssysteme umfassen oftmals mehrere hunderttausend Mehrweg-Warenträger, die in dem Warenträger-Zirkulationssystem zum Einsatz kommen, abhängig davon wie viele Länder und Teilnehmer das Warenträger-Zirkulationssystem umfasst. Dementsprechend ist es für den Dienstleister des Warenträger-Zirkulationssystems wichtig für die Logistik, die Anzahl, Art und Standorte der Mehrweg-Warenträger zu kennen, insbesondere da die Mehrweg-Warenträger nicht nur zwischen den unterschiedlichen Stationen, sondern auch zwischen den einzelnen Teilnehmern des Warenträger-Zirkulationssystems wie Produzenten, Zwischenhändlern und Verkaufsstellen zirkulieren. Wenn dem Dienstleister beispielsweise bekannt ist, wie viele Mehrweg-Warenträger sich bei einer Bestückungsstation befinden, kann rechtzeitig veranlasst werden, dass neue Mehrweg-Warenträger dort hingeliefert werden, sobald der Vorrat eine vordefinierte Schwelle unterschreitet.

Zur Lokalisierung von Mehrweg-Warenträgern in dem Warenträger-Zirkulationssystem ist bekannt, Barcodes an den Mehrweg-Warenträgern anzubringen, die gescannt werden können. Dabei kann aus den Barcodes eine Identifikationsnummer des jeweiligen Mehrweg-Warenträgers ausgelesen werden, die in der Datenbank des Dienstleisters zugeordnet werden kann, so dass neben der Standortinformation für den Mehrweg-Warenbehälter auch Informationen über dessen derzeitige Verwendung gewonnen werden können.

Des Weiteren ist bekannt, die Mehrweg-Warenträger mit einem Transponder auszustatten, der eine Kennung enthält. Diese Information kann dann von einem Lesegerät, insbesondere einer Empfangsantenne, empfangen und an den Dienstleister weitergeleitet werden. Bei dem Transponder kann es sich beispielsweise um ein RFID-Label handeln, und die Empfangsantenne ist ein RFID-Reader, der fest an vorher bestimmten Orten installiert wird. Da aber die RFID-Reader vergleichsweise teuer sind, sind die Kosten für das Warenträger-Zirkulationssystem und somit auch für Teilnehmer des Warenträger-Zirkulationssystems sehr hoch sind.

Alternativ kann als Transponder auch ein Bluetooth Low Energy (BLE) Beacon verwendet werden, was deutlich günstiger in der Anschaffung der Access-Points ist. Um die darin hinterlegte Kennung auszulesen und an den Dienstleister weiterleiten zu können, werden jedoch BLE Access-Points benötigt, welche üblicherweise mit GPS und einer Verbindung zu einem Telekommunikations-Netzwerk ausgestattet sind. Um eine zuverlässige Überwachung des Warenträger-Zirkulationssystems zu gewährleisten, muss jedoch eine große Anzahl dieser BLE Access-Points installiert werden, insbesondere bei Produzenten, Lieferanten und in Supermärkten.

Um die gewünschte Informationsdichte zu erhalten, ist es notwendig, sehr viele Access-Points zu installieren, beispielsweise in Supermärkten und bei Transportdienstleistern. Hierdurch ergibt sich ein hoher Aufwand. Zudem können bei den im Stand der Technik genannten Überwachungsmöglichkeiten der Mehrweg-Warenträger keine Echtzeitinformationen zur Verfügung gestellt werden, da sich die Mehrweg-Warenträger in der Nähe eines mit dem Telekommunikations-Netzwerk verbundenen Access-Points befinden müssen, um die Kennung des Beacons des Mehrweg-Warenträgers an den Dienstleister weiterzuleiten.

Somit ist es eine Aufgabe der Erfindung, ein Warenträger-Zirkulationssystem bereitzustellen, in dem jederzeit Informationen zu den zirkulierenden Mehrweg-Warenträgern abgerufen werden können, ohne dass die für das Warenträger-Zirkulationssystem anfallenden Kosten steigen.

Diese Aufgabe wird erfindungsgemäß gelöst durch einen Mehrweg-Warenträger, der dafür vorgesehen und eingerichtet ist, in einem Warenträger-Zirkulationssystem verwendet zu werden. Dabei ist an dem Warenträger ein Access-Point für ein Beacon angebracht. Der Grundgedanke der Erfindung ist es, die Access-Points nicht fest an bestimmten Stellen zu installieren, beispielsweise in Supermärkten oder bei Transportdienstleistern, sondern die Access-Points mit den Mehrweg-Warenträgern zirkulieren zu lassen. Mittels des mobilen Access-Points können dann Informationen zu dem Mehrweg-Warenträger, der den Access-Point trägt, und/oder zu anderen Mehrweg-Warenträgern, die sich in der Nähe befinden, weitergeleitet werden.

Bei dem Access-Point kann es sich um einen Access-Point handeln, der nach dem BLE-Standard (Bluetooth Low Energy) arbeitet. Der Access-Point am Mehrweg-Warenträger stellt somit die Kommunikationsschnittstelle zum Dienstleister her und kann Daten, insbesondere die von einem Beacon empfangenen Kennung, sowie seinen eigenen Standort übertragen, da der Access-Point mit GPS und einer Telekommunikations-Netzwerkverbindung ausgestattet ist. Zudem können durch die Verwendung eines BLE-Standards die Kosten gering gehalten werden, da solche Transponder weit verbreitet und somit günstig zu erwerben sind.

Gemäß einer Ausführungsform umfasst der Mehrweg-Warenträger einen Energiespeicher, mit dem der Access-Point mit elektrischer Energie versorgt wird.

Gemäß einer Ausführungsform ist an dem Mehrweg-Warenträger zusätzlich ein Beacon angebracht. Somit kann dieser Mehrweg-Warenträger seine Kennung direkt über den Access-Point senden.

Alternativ kann auch vorgesehen sein, dass in dem Access-Point selbst die Kennung für den mit dem Access-Point ausgestatteten Mehrweg-Warenträger hinterlegt ist, so dass kein Beacon separat vorgesehen werden muss.

Das Beacon des Mehrweg-Warenträgers kann ebenfalls nach dem BLE-Standard arbeiten. Somit ist sichergestellt, dass der Access-Point mit dem Beacon kommunizieren kann.

Grundsätzlich können alternativ zum BLE-Standard auch andere Kommunikationsstandards verwendet werden. Wichtig dabei ist, dass das Beacon und der Access-Point den gleichen Kommunikationsstandard verwenden, um eine Datenübertragung zwischen Beacon und Access-Point zu gewährleisten. Wichtig ist auch, dass es sich um einen Kommunikationsstandard handelt, der sparsam mit der für die Versorgung der Komponenten notwendigen Energie umgeht.

Gemäß einer Ausführungsform ist auch an dem Mehrweg-Warenträger, das mit dem Beacon versehen ist, ein Energiespeicher vorgesehen, mit dem das Beacon mit elektrischer Energie versorgt wird. Bei dem Energiespeicher für das Beacon kann es sich beispielsweise um einen Kondensator oder eine Batterie handeln.

Gemäß einer bevorzugten Ausführungsform ist vorgesehen, dass der Access-Point und das Beacon zusammen mit ihrem jeweiligen Energiespeicher hermetisch abgeschlossen und gekapselt am Mehrweg-Warenträger aufgenommen ist, insbesondere flüssigkeitsdicht gekapselt gegen Reinigungsflüssigkeiten mit einem Druck von bis zu 240 bar. Dies ermöglicht, die Mehrweg-Warenträger mit den üblichen Reinigungsprozeduren zu behandeln, bei denen durch den verwendeten hohen Wasserdruck nicht nur die üblichen Verunreinigungen, sondern auch Klebeetiketten zuverlässig entfernt werden können, ohne dass das Risiko einer Beschädigung des Beacons oder des Access Points besteht.

Die Aufgabe wird erfindungsgemäß auch gelöst durch ein Warenträger-Zirkulationssystem mit mehreren Mehrweg-Warenträgern wie vorhergehend beschrieben. Zusätzlich umfasst das Warenträger-Zirkulationssystem eine Vielzahl von Mehrweg-Warenträgern, die lediglich mit einem Beacon versehen sind. Dabei ist das Verhältnis von Mehrweg-Warenträgern mit jeweils einem Access-Point zu Mehrweg-Warenträgern mit lediglich jeweils einem Beacon kleiner als 1:20. Insbesondere ist das Verhältnis kleiner als 1:50 und besonders bevorzugt in der Größenordnung von 1:100. Dabei zirkulieren die Mehrweg-Warenträger mit dem Access-Point zufällig innerhalb des Warenträger-Zirkulationssystems. Durch die Verwendung von lediglich einem Bruchteil von Mehrweg-Warenträgern mit Access-Point im Vergleich zu der Gesamtzahl an Mehrweg-Warenträgern, die im Warenträger-Zirkulationssystem zirkulieren, können die Kosten gering gehalten werden, da die Beacons deutlich günstiger sind als die Access-Points. Dennoch sind so viele Access-Points im Umlauf, dass mit ausreichend hoher Wahrscheinlichkeit gewährleistet ist, dass an jedem relevanten Punkt entlang der Zirkulationskette mindestens ein Access-Point vorhanden ist, über den auch die Mehrweg-Warenträger, die selbst keinen Access-Point enthalten, indirekt ihre Kennung an einen zugeordneten Server schicken können, indem sie sich mit dem Access-Point verbinden.

Es kann vorgesehen sein, dass zusätzlich Einweg-Warenträger zirkulieren, die mit einem Beacon versehen sind. Dieser verbindet sich dann mit dem Access-Point eines Mehrweg-Warenträgers und kann auch seine Kennung an den Logistik-Server senden.

Außerdem wird die Aufgabe erfindungsgemäß gelöst durch ein Verfahren zum Übertragen von Standortinformationen von Mehrweg-Warenträgern, die innerhalb des Warenträger-Zirkulationssystems, wie soeben beschrieben, lediglich mit einem Beacon versehen sind, an einen Logistik-Server. Dabei sendet in einem ersten Schritt ein Beacon seine Kennung an einen Access-Point, der sich direkt oder indirekt innerhalb seiner Reichweite befindet. In einem zweiten Schritt überträgt der Access-Point die Kennung des Beacons und seine eigene Standortinformation über ein Telekommunikations-Netzwerk an den Logistik-Server. Dabei wird der Standort des Access-Points als der ungefähre Standort des Beacons angesehen.

Mit diesem Verfahren kann die Standortinformation in Echtzeit sowohl von Mehrweg-Warenträgern mit Access-Points als auch von Mehrweg-Warenträgern, die lediglich mit einem Beacon versehen sind, über den Access-Point eines Mehrweg-Warenträgers an einen Logistik-Server übermittelt werden, ohne dass festinstallierte Access-Points bei Teilnehmern des Warenträger-Zirkulationssystems wie Logistikzentren, Verkaufsstellen oder Produzenten, installiert werden müssen.

Es kann außerdem vorgesehen sein, dass mehrere Beacon untereinander kommunizieren, so dass auch ein Beacon, innerhalb dessen Reichweite sich kein Access-Point befindet, über mindestens ein anderes Beacon seine Kennung an einen Access-Point übertragen kann. Es wird also durch die Kommunikation der Beacons untereinander ein lokales Logistik-Datennetzwerk der Mehrweg-Warenträger gebildet, so dass auch diejenigen Mehrweg-Warenträger, die weiter vom nächsten Access-Point entfernt sind als ihr Beacon senden kann, indirekt über die anderen Beacons und das zwischen ihnen aufgebaute Mesh-Netzwerk seine Kennung an den Access-Point schicken kann, der sie wiederum zusammen mit der eigenen Standort-Information an den Logistik-Server weiterleitet.

Schließlich wird die Aufgabe erfindungsgemäß auch gelöst durch ein mobiles Logistik-Datennetzwerk, das mittels der Mehrweg-Warenträger eingerichtet ist, die innerhalb des zuvor beschriebenen Warenträger-Zirkulationssystems zwischen mindestens Bestückungsstation, Logistikzentren, Transportmitteln und Verkaufsstellen zirkulieren. Dabei sind die Beacons untereinander miteinander vernetzt und über die Access-Points mit mindestens einem Logistik-Server verbunden, so dass Beacons, innerhalb derer Reichweite sich kein Access-Point befindet, ihre Kennung an einen Access-Point senden können, der die Kennung wiederum über ein Telekommunikations-Netzwerk an den Logistik-Server sendet. Dementsprechend kann ohne fest installierte Access-Points sichergestellt werden, dass die Beacons ihre Kennung an den Logistik-Server schicken, da die Beacons untereinander ein mobiles Logistik-Datennetzwerk (Mesh-Netzwerk) bilden.

Weitere Merkmale und Vorteile der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Warenträger-Zirkulationssystems;
- Figur 2 eine schematische Darstellung eines Mehrweg-Warenträgers mit einem Beacon;
- Figur 3 eine perspektivische Darstellung einer ersten Ausführungsform eines erfindungsgemäßen Mehrweg-Warenträgers mit einem Access-Point;
- Figur 4 eine perspektivische Ansicht einer zweiten Ausführungsform des erfindungsgemäßen Mehrweg-Warenträgers mit Access-Point; und
- Figur 5 eine schematische Darstellung eines erfindungsgemäßen mobilen Logistik-Datennetzwerks.

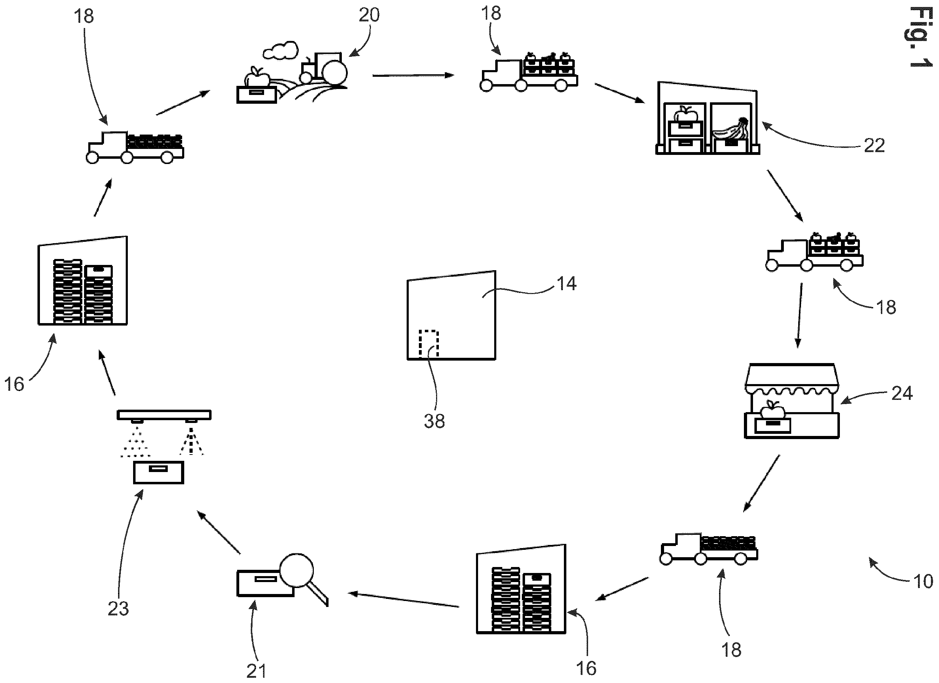

In Figur 1 ist ein erfindungsgemäßes Warenträger-Zirkulationssystem 10 gezeigt, in dem eine Vielzahl an Mehrweg-Warenträgern 12 zwischen verschiedenen Stationen zirkuliert. Der besseren Lesbarkeit halber wird nachfolgend durchgehend lediglich von "Warenträger" gesprochen, wenn auf den Mehrweg-Warenträger 12 Bezug genommen wird.

Üblicherweise werden die Warenträger 12 von einem Dienstleister 14 gestellt, der die Warenträger 12 instand hält und reinigt sowie den verschiedenen Produzenten zuteilt.

Bei den Warenträgern 12 kann es sich sowohl um wie in den Figuren gezeigte kistenartige Behälter aber auch um Paletten, Trays, Steigen oder kistenförmige Behälter handeln. Insbesondere wenn es sich bei den Warenträgern 12 um kisten- oder containerförmige Behälter handelt, können diese falt- bzw. klappbar ausgestaltet sein, sodass sie für die Lagerung möglichst wenig Stauraum benötigen, wie auch in Figur 1 zu sehen ist.

Das in Figur 1 gezeigte Warenträger-Zirkulationssystem 10 ist lediglich ein Beispiel, sodass ein beliebiges Warenträger-Zirkulationssystem 10 auch mehr oder weniger als die in Figur 1 gezeigten elf Stationen aufweisen kann.

In der hier gezeigten Ausführungsform werden Warenträger 12 von dem Dienstleister 14 aus einem Logistikzentrum 16 mittels eines Transportmittels 18, hier ein Lastkraftwagen (LKW), an Bestückungsstationen 20 geliefert. Nachdem die Warenträger 12 an der Bestückungsstation 20 von Produzenten befüllt worden sind, werden sie an ein zentrales Verteilungszentrum 22 geliefert, von dem aus die Warenträger 12 mit ihrem Inhalt (ggfls. über Zwischenhändler) zu den entsprechenden Verkaufsstellen 24 befördert werden. Werden die Warenträger 12 von den Verkaufsstellen 24 nicht länger benötigt, werden sie zu einem weiteren Logistikzentrum 16 des Dienstleisters 14 befördert, wo sie jeweils bei einer Aufnahmestation 21 und einer Reinigungsstation 23 inspiziert und gereinigt werden, bevor sie wieder an eine Bestückungsstation 20 geliefert werden können.

Je nach Größe des Warenträger-Zirkulationssystems 10 insbesondere basierend auf der Anzahl der Teilnehmer sowie der zu beliefernden Länder, können mehrere hunderttausend Warenträger 12 in einem Warenträger-Zirkulationssystem 10 zirkulieren. Dabei werden in den Logistikzentren 16 üblicherweise mehrere 10.000 Warenträger 12 gelagert und über die Transportmittel 18 4.000 bis 6.000 Warenträger 12 transportiert. Dementsprechend ist es wichtig für den Dienstleister, 14 die Standorte der Warenträger 12 zu kennen, um zu gewährleisten, dass die Warenträger 12 möglichst effizient zirkulieren.

Allgemein ausgedrückt werden die Standort-Informationen an einen Logistik-server mittels mobiler Access-Points geschickt. Hierbei wird eine Kennung eines Beacons mit der Standort-Information des Access-Points "verheiratet", der die Kennung an den Logistik-Server weiterleitet.

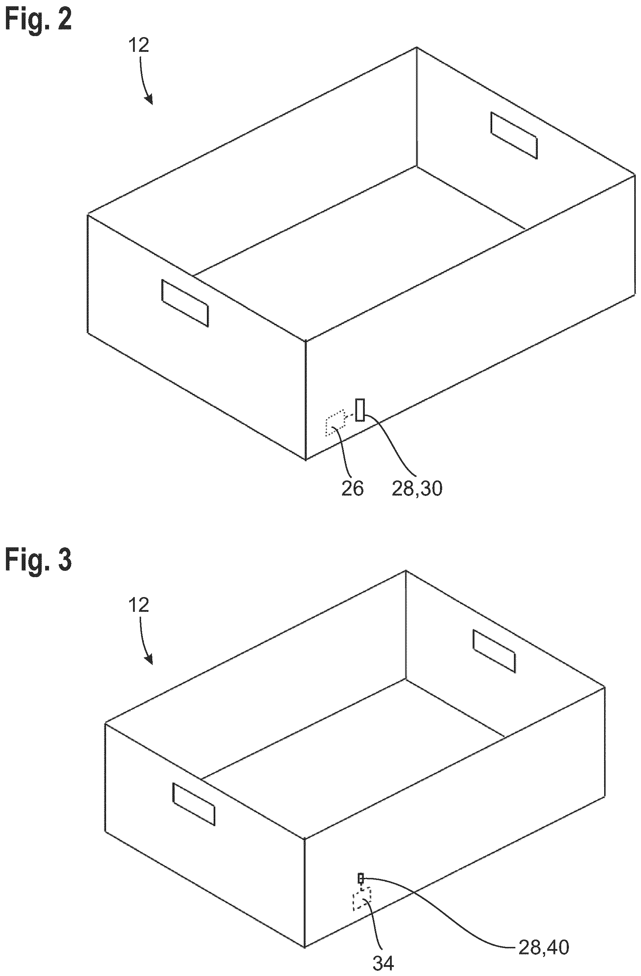

In diesem System werden zwei verschiedene Arten von Warenträgern 12 verwendet, die in Figuren 2 und 3 gezeigt sind.

Auf dem in Figur 2 gezeigten Warenträger 12 ist ein Beacon 26 angebracht, also ein kleiner Funksender. In dem Beacon 26 ist eine individuelle Kennung hinterlegt, die das Beacon 26 senden kann. Seitens des Logistik-Dienstleisters, der die Warenträger 12 in einem Umlaufbetrieb zirkuliert, ist der Kennung des Beacons eine Identifikationsnummer des einzelnen Warenträgers 12 zugeordnet.

Um das Beacon 26 kontinuierlich mit elektrischer Energie zu versorgen, ist ein Energiespeicher 28 vorgesehen. In dem hier gezeigten Ausführungsbeispiel handelt es sich bei dem Energiespeicher 28 um eine Batterie 30.

Alternativ kann als Energiespeicher auch ein Kondensator vorgesehen sein.

In Figur 3 ist eine Ausführungsform eines erfindungsgemäßen Warenträgers 12 zu sehen, wobei an dem Warenträger 12 ein Access-Point 34 für ein Beacon 26 angebracht ist.

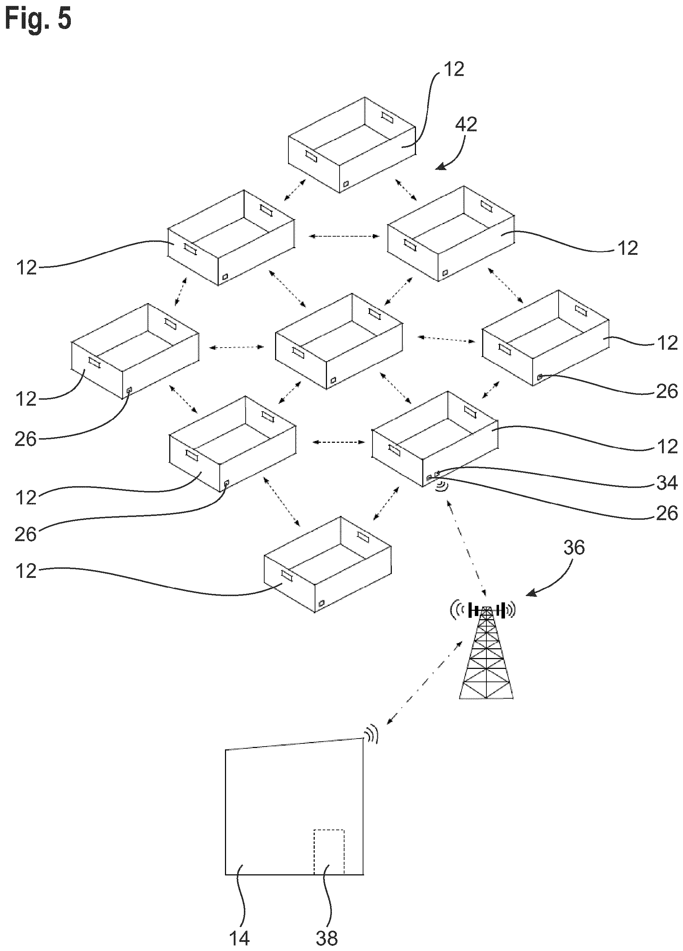

Der Access-Point 34 ist dazu eingerichtet, seinen Standort mittels GPS zu ermitteln und eine Schnittstelle zu einem Telekommunikations-Netzwerk 36 (siehe Figur 5) bereitzustellen. Zusätzlich kann der Access-Point 34 Informationen von einem oder mehreren Beacons 26 (also deren Kennung) erfassen und diese über ein Telekommunikations-Netzwerk 36 an einen Logistik-Server 38 des Dienstleisters 14 weiterleiten.

Ebenso wie für den in Bezug auf Figur 2 beschriebenen Warenträger 12 mit dem Beacon 26 sind bei dem Warenträger 12 von Figur 3 mit dem Access-Point 34 ein Energiespeicher 28 vorgesehen.

Um das Beacon 26 mit elektrischer Energie zu versorgen, kann eine (etwas größere) Batterie verwendet werden. Das Beacon 26 hat einen so geringen Energieverbrauch, dass die Batterie eine Lebenszeit von bis zu 10 Jahren, insbesondere bis zu 15 Jahren, haben kann.

Der Access-Point 34 ist hier so energiesparend, dass eine Lebensdauer von 7 Jahren erzielt wird. Diese Lebensdauer wird insbesondere dadurch erhalten, dass der Access-Point 34 ca. alle 6 Stunden nach einen Beacon scannt und nur alle 24 h eventuell gesammelte Daten über ein Telekommunikations-Netzwerk 36 an einen Logistik-Server 38 überträgt.

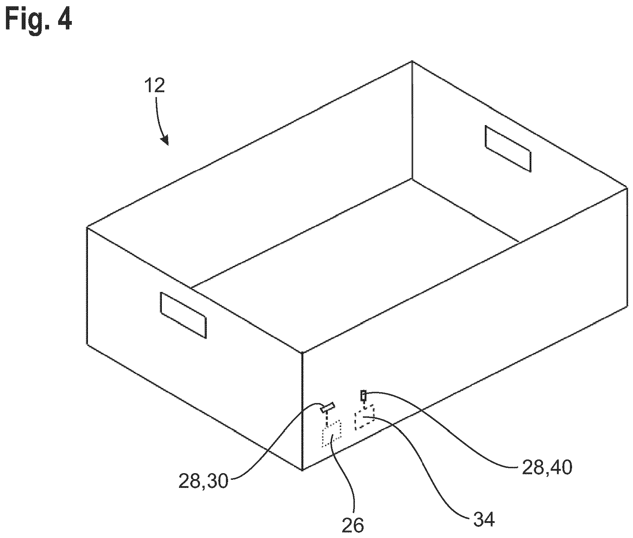

Eine alternative Ausführungsform des erfindungsgemäße Warenträgers 12 ist in Figur 4 gezeigt, welcher wie der in Figur 3 gezeigte Warenträger 12 einen Access-Point 34 und einen Energiespeicher 28 aufweist. Zusätzlich zu dem Access-Point 34 ist an den Warenträger 12, der in Figur 4 gezeigt ist, ein Beacon 26 angebracht, welches im Wesentlichen dem in Bezug auf Figur 2 beschriebenen Beacon 26 entspricht.

Bei jeder der Ausführungsformen sind der Access Point 34 und das Beacon 26 zusammen mit der Batterie 30, die sie mit elektrischer Energie versorgt, hermetisch abgeschlossen und gekapselt am Mehrweg-Warenträger aufgenommen. "Hermetisch abgeschlossen und gekapselt" bedeutet, dass die jeweilige Baugruppe (als entweder der Access Point mit seiner Batterie oder das Beacon mit seiner Batterie) vollständig und dicht von Material umgeben ist, beispielsweise Wänden des Warenträgers 12, verschweißten oder verklebten Deckeln oder einem Vergussmaterial. Insbesondere gibt es kein von außen zugängliche Anschlusskontakte, Stecker, Schalter oder ähnliches.

Durch die hermetisch abgeschlossene und gekapselte Anordnung des Access Points 34 und des Beacons 26 am Mehrweg-Warenträger 12 ist gewährleistet, dass diese Bauteile beim Reinigen der Mehrweg-Warenträger 12 nicht beschädigt werden können. Beim Reinigen werden die Mehrweg-Warenträger 12 Wasser oder einer anderen Reinigungsflüssigkeit mit einem Druck von bis zu 240 bar ausgesetzt. Auf diese Weise werden anhaftende Verunreinigungen und auch Klebeetiketten entfernt, die beim vorherigen Umlauf aufgebracht wurden. Nur durch die hermetische Kapselung ist gewährleistet, dass das Beacon 26 und der Access Point 34 bei den Reinigungsvorgängen nicht beschädigt werden.

Vorzugsweise verwenden sowohl die Access-Points 34 als auch die Beacons 26 der Warenträger 12, die in dem Warenträger-Zirkulationssystem 10 zirkulieren, den BLE-Standard (Bluetooth Low Energy). Solche Beacons 26 zeichnen sich durch geringe Kosten aus. Zusätzlich benötigen Beacons 26, die nach dem BLE-Standard arbeiten, nur sehr wenig elektrische Energie, um Daten, d.h. ihre Kennung, zu übermitteln.

Alternativ zu dem BLE-Standard können die Access-Points 34 sowie die Beacons 26 selbstverständlich auch nach anderen Standards arbeiten. Wichtig hierbei ist lediglich, dass die Access-Points 34 und die Beacons 26 innerhalb eines Warenträger-Zirkulationssystems 10 nach dem gleichen Standard arbeiten, sodass eine Kommunikation zwischen den Beacons 26 und den Access-Points 34 möglich ist.

Da die Access-Points 34 erheblich teurer als die Beacons 26 sind, werden innerhalb des Warenträger-Zirkulationssystems 10 sehr viel weniger Warenträger 12 mit Access-Point 34 in Umlauf gebracht als Warenträger 12 mit Beacon 26. Die Verteilung ist rein zufällig. Dabei ist das Verhältnis von Warenträgern 12 mit Access-Point 34 zu Warenträgern 12 mit lediglich einem Beacon 26 kleiner als 1:20, insbesondere kleiner als 1:50 und besonders bevorzugt in der Größenordnung von 1:100. Aufgrund der hohen Anzahl an Warenträgern 12, die sich normalerweise an jedem Punkt entlang des Zirkulationskreises befinden, ist mit einer sehr hohen Wahrscheinlichkeit sichergestellt, dass auch bei einem derart geringen Anteil von 1 % an Warenträgern 12 mit Access-Points 34 immer mindestens ein Access-Point 34 zur Verfügung steht, mit dem die übrigen Beacons 26, die sich an jedem Punkt entlang des Zirkulationskreises befinden, ihre Kennung über den Access-Point 34 an den Logistik-Server senden können.

Während die Beacons 26 ihre Kennung nicht selbst an den Logistik-Server 38 übermitteln können, können die Beacons 26 jedoch untereinander kommunizieren, so dass von den Beacons 26, die nahe beieinander befinden, ein mobiles Logistik-Datennetzwerk 42 aufgebaut wird, wie es in Figur 5 gezeigt ist.

Durch das Logistik-Datennetzwerk 42 kann somit auch die Kennung von einem Warenträger 12 an den Logistik-Server 38 übermittelt werden, der keinen eigenen Access-Point 34 aufweist und innerhalb dessen unmittelbarer Reichweite sich kein Access-Point 34 befindet.

Dementsprechend sendet das Beacon 26 eines Warenträgers 12 ohne Access-Point 34 zur Übertragung von Standort-Informationen in einem ersten Schritt seine Kennung an einen Access-Point 34, der sich innerhalb seiner Reichweite befindet. Der Access-Point 34 überträgt dann in einem zweiten Schritt die erhaltene Kennung des Beacons 26 sowie seine eigene Standort-Information über das Telekommunikations-Netzwerk 36 an den Logistik-Server 38.

Dabei wird der Standort des Access-Points 34 als der ungefähre Standort des Beacons 26 angesehen, sodass zumindest die derzeitige Station innerhalb des Warenträger-Zirkulationssystems 10 für den Warenträger 26 mit lediglich dem Beacon 26 korrekt zugeordnet werden kann.

Beacons 26, die keinen Access-Point 34 innerhalb ihrer direkten Reichweite haben, können ihre Kennung an einen Beacon 26 in ihrer Reichweite senden, der die Kennung dann, wenn sich der nächste Access-Point 34 in seiner Reichweite befindet, die Kennung an diesen Access-Point weiterleitet oder, falls dies nicht der Fall ist, die Kennung an einen wiederum weiteren Beacon 26 weiterleitet. Auf diese Weise kann die Kennung indirekt über das zwischen den Beacons 26 aufgebaute Mesh-Netzwerk an den Access-Point 34 gesendet werden.

Da die Warenträger 12 mit Access-Point 34 zufällig innerhalb des Warenträger-Zirkulationssystems 10 zirkulieren, ist eine konstante Übertragung von Standort-Informationen möglich, ohne dass die Warenträger 12, insbesondere deren Beacon 26, an einem fest installierten Access-Point 34 vorbei müssen, um Daten, insbesondere ihre Kennung, zu übertragen.

Neben den Standort-Informationen kann die über den Access-Point 34 übermittelte Kennung innerhalb einer Datenbank auf dem Logistik-Server 38 einem spezifischen Warenträger 12 zugeordnet werden, so dass neben der Standort-Information des Warenträger 12 auch Informationen über dessen derzeitige Verwendung gewonnen werden können. Zu diesen Informationen zählen beispielsweise Lieferanten, Geschäften und/oder Produkten denen der Warenträger 12 aktuell zugeordnet ist.

In das Zirkulationssystem können auch Einweg-Warenträger integriert werden, beispielsweise Pappschachten, die ebenfalls mit einem Beacon versehen sind. Dies ist dann sinnvoll, wenn die Information über den Standort des Einweg-Warenträgers so relevant ist, dass sie den Aufwand für das dann nur einmalig verwendete Beacon rechtfertigt.

## Patentansprüche

1. Mehrweg-Warenträger (12), der dafür vorgesehen und eingerichtet ist, in einem Warenträger-Zirkulationssystem (10) verwendet zu werden, wobei an dem Warenträger ein Access-Point (34) für ein Beacon (26) angebracht ist.

2. Mehrweg-Warenträger (12) nach Anspruch 1, **dadurch gekennzeichnet, dass** der Access-Point (34) nach dem BLE-Standard (Bluetooth Low Energy) arbeitet.

3. Mehrweg-Warenträger (12) nach einem der vorhergehenden Ansprüche, **dadurch gekennzeichnet, dass** ein Energiespeicher (28) vorgesehen ist, mit dem der Access-Point (34) mit elektrischer Energie versorgt wird.

4. Mehrweg-Warenträger (12) nach Anspruch 3, **dadurch gekennzeichnet, dass** der Access-Point (34) zusammen mit dem Energiespeicher (28) hermetisch abgeschlossen und gekapselt am Mehrweg-Warenträger (12) aufgenommen ist, insbesondere flüssigkeitsdicht gekapselt gegen Reinigungsflüssigkeiten mit einem Druck von bis zu 240 bar.

5. Mehrweg-Warenträger (12) nach einem der vorhergehenden Ansprüche, **dadurch gekennzeichnet, dass** an dem Warenträger auch ein Beacon (26) angebracht ist.

6. Mehrweg-Warenträger (12) nach Anspruch 5, **dadurch gekennzeichnet, dass** das Beacon (26) nach dem BLE-Standard (Bluetooth Low Energy) arbeitet.

7. Mehrweg-Warenträger (12) nach einem der Ansprüche 5 und 6, **dadurch gekennzeichnet, dass** ein Energiespeicher (28) vorgesehen ist, mit dem das Beacon (26) mit elektrischer Energie versorgt wird.

8. Mehrweg-Warenträger (12) nach Anspruch 7, **dadurch gekennzeichnet, dass** der Energiespeicher (28) eine Batterie (30) ist.

9. Mehrweg-Warenträger (12) nach Anspruch 8, **dadurch gekennzeichnet, dass** das Beacon (26) zusammen mit dem Energiespeicher (28) hermetisch abgeschlossen und gekapselt am Mehrweg-Warenträger (12) aufgenommen ist.

10. Warenträger-Zirkulationssystem (10) mit mehreren Mehrweg-Warenträgern (12) nach einem der vorhergehenden Ansprüche und einer Vielzahl von Mehrweg-Warenträgern (12), die lediglich mit einem Beacon (26) versehen sind, wobei das Verhältnis von Mehrweg-Warenträgern (12) mit jeweils einem Access-Point (34) zu Mehrweg-Warenträgern (12) mit lediglich jeweils einem Beacon (26) kleiner als 1:20 ist, insbesondere kleiner als 1:50 und besonders bevorzugt in der Größenordnung von 1:100, wobei die Mehrweg-Warenträger (12) mit Access-Point (34) zufällig zirkulieren.

11. Warenträger-Zirkulationssystem nach Anspruch 10, **dadurch gekennzeichnet, dass** zusätzlich Einweg-Warenträger zirkulieren, die mit einem Beacon versehen sind.

12. Verfahren zum Übertragen von Standort-Informationen von Mehrweg-Warenträgern (12), die innerhalb des Warenträger-Zirkulationssystems (10) nach Anspruch 10 lediglich mit einem Beacon (26) versehen sind, an einen Logistik-Server (38), wobei in einem ersten Schritt ein Beacon (26) seine Kennung an einen Access-Point (34) sendet, der sich innerhalb seiner Reichweite befindet, und in einem zweiten Schritt der Access-Point (34) die Kennung des Beacons (26) und seine eigene Standort-Information über ein Telekommunikations-Netzwerk (36) an den Logistik-Server (38) überträgt, wobei der Standort des Access-Points (34) als der ungefähre Standort des Beacons (26) angesehen wird.

13. Verfahren nach Anspruch 12, **dadurch gekennzeichnet, dass** mehrere Beacon (26) untereinander kommunizieren, so dass auch ein Beacon (26), innerhalb dessen Reichweite sich kein Access-Point (34) befindet, über mindestens ein anderes Beacon (26) seine Kennung an einen Access-Point (34) übertragen kann.

14. Mobiles Logistik-Datennetzwerk (42) eingerichtet mittels der Mehrweg-Warenträger (12), die innerhalb des Warenträger-Zirkulationssystems (10) nach Anspruch 10 oder Anspruch 11 zufällig zwischen mindestens Bestückungsstationen (20), Logistikzentren (16), Transportmitteln (18) und Verkaufsstellen (24) zirkulieren, wobei die Beacons (26) untereinander miteinander vernetzt sind und über die Access-Points (34) mit mindestens einem Logistik-Server (38) verbunden sind, so dass Beacons (26), innerhalb derer Reichweite sich kein Access-Point (34) befindet, ihre Kennung an einen Access-Point (34) senden können, der die Kennung wiederum über ein Telekommunikations-Netzwerk (36) an den Logistik-Server (38) sendet.
